(19) **Europäisches Patentamt / European Patent Office / Office européen des brevets**

(11) **EP 2 326 933 B1**

(12) **EUROPEAN PATENT SPECIFICATION**

(45) Date of publication and mention
of the grant of the patent:
**29.05.2013 Bulletin 2013/22**

(21) Application number: **09785508.4**

(22) Date of filing: **20.08.2009**

(51) Int Cl.:
***G01M 3/24*** (2006.01)

(86) International application number:
**PCT/GB2009/051043**

(87) International publication number:
**WO 2010/020817 (25.02.2010 Gazette 2010/08)**

(54) **IMPROVEMENTS IN AND RELATING TO APPARATUS FOR THE AIRBORNE ACOUSTIC INSPECTION OF PIPES**

VERBESSERUNGEN IN BEZUG AUF VORRICHTUNGEN ZUR AKUSTISCHEN UNTERSUCHUNG VON RÖHREN IN DER LUFT

AMELIORATIONS D UN APPAREIL POUR L INSPECTION ACOUSTIQUE AEROPORTEE DE CONDUITES OU RELATIVES À UN APPAREIL POUR L INSPECTION ACOUSTIQUE AEROPORTEE DE CONDUITES

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **20.08.2008 GB 0815199**

(43) Date of publication of application:
**01.06.2011 Bulletin 2011/22**

(73) Proprietor: **Acoustic Sensing Technology (UK) LTD**
**Bradford**
**BD7 1DP (GB)**

(72) Inventors:
• **HOROSHENKOV, Kirill, Vjacheslavovitch**
**Ilkley, Yorkshire LS29 7RG (GB)**
• **LONG, Richard, John**
**Derby, Derbyshire DE22 2DQ (GB)**
• **TAIT, Simon, Joseph**
**Howorth, Yorkshire BD22 8QL (GB)**

(74) Representative: **Gosnall, Toby et al**
**Barker Brettell LLP**
**100 Hagley Road**
**Edgbaston**
**Birmingham**
**B16 8QQ (GB)**

(56) References cited:
**WO-A1-01/81885     WO-A1-03/048713**

• **PODD F J ET AL: "Rapid sonic characterisation of sewer change and obstructions" WATER SCIENCE AND TECHNOLOGY, vol. 56, no. 11, 2007, pages 131-139, XP002553408 IWA PUBLISHING; ALLIANCE HOUSE, GB**
• **HEYSER: "Instantaneous intensity" AES, THE 81TH CONVENTION, 1986, pages 1-11, XP040368876 Los Angeles, California, US cited in the application**
• **CROCKER M J ET AL: "Fundamentals of the direct measurement of sound intensity and practical applications" ACOUSTICAL PHYSICS, NAUKA/INTERPERIODICA, MO, vol. 49, no. 2, 1 March 2003 (2003-03-01), pages 163-175, XP019303644 ISSN: 1562-6865**

**Description**

Field of the Invention

The present invention relates to apparatus and methods for the airborne acoustic inspection of pipes.

Background to the Invention

It is known, for instance from WO 03/048713 to carry out an inspection of a sewer pipe using airborne acoustic signals. However, the present inventors believe that the system disclosed in WO 03/048713 can be improved upon in terms of resolution and ease of use.

"Rapid Sonic Characterisation of Sewer Change and Obstructions", Podd, et al, Water Science and Technology, Vol. 56, no. 11, 2007, pgs 131-139 discloses apparatus for inspecting sewers using acoustics.

It is an aim of preferred embodiments of the present invention to provide an improved airborne acoustic inspection apparatus.

Summary of the Invention

According to the present invention in a first aspect, there is provided an apparatus for the airborne acoustic inspection of pipes, the apparatus comprising:

a loudspeaker configured to emit acoustic signals;
a detector array configured to detect acoustic signals; and
a signal processor configured to determine an acoustic intensity from the detected acoustic signals; characterised in that the apparatus comprises a time-shift compensation unit configured to compensate the acoustic intensity for time differences between receipt of a given signal at spaced microphone pairs of the detector array.

Further features of the present invention are set out in the appended claims.

Brief Description of the Drawings

For a better understanding of the invention, and to show how embodiments of the same may be carried into effect, reference will now be made, by way of example, to the accompanying diagrammatic drawings in which:

Figure 1 is a schematic perspective illustration of an apparatus according to an embodiment of the present invention;

Figure 2 is a schematic illustration of how the apparatus of Figure 1 can be used in practice;

Figure 3 is a diagrammatic representation of a signal processor shown in Figure 1;

Figure 4 is functional flow diagram illustrating a method of use of the apparatus shown in Figures 1 and 2.

Figure 5A is a graph illustrating a received and Figure 5B a deconvolved signal from a microphone channel.

Figure 6A is a graph illustrating a deconvolved and filtered impulse response.

Figure 6B is a graph illustrating a deconvolved and filtered acoustic intensity response.

Figure 7 is a graph illustrating the positive part of the acoustic intensity response function for a test pipe.

Description of the Preferred Embodiments

The aspects and features of the present invention are described hereinafter with reference to flowchart illustrations of user interfaces, methods, and computer program products according to exemplary embodiments of the present invention. It will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks.

These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks.

The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block of the flowchart illustrations may represent a module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

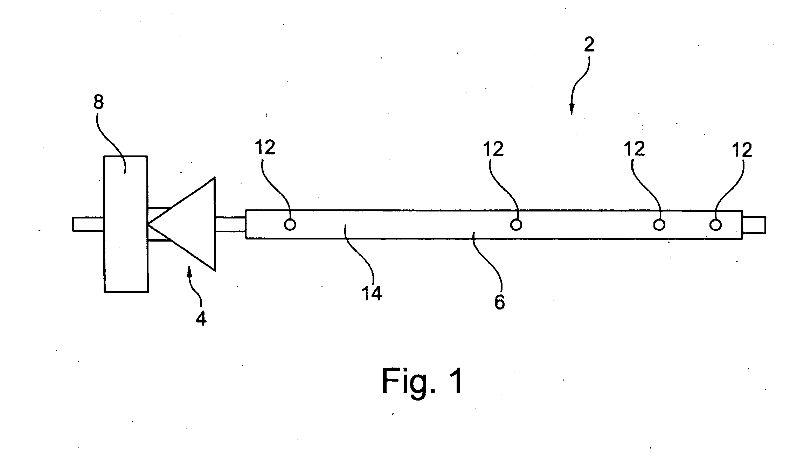

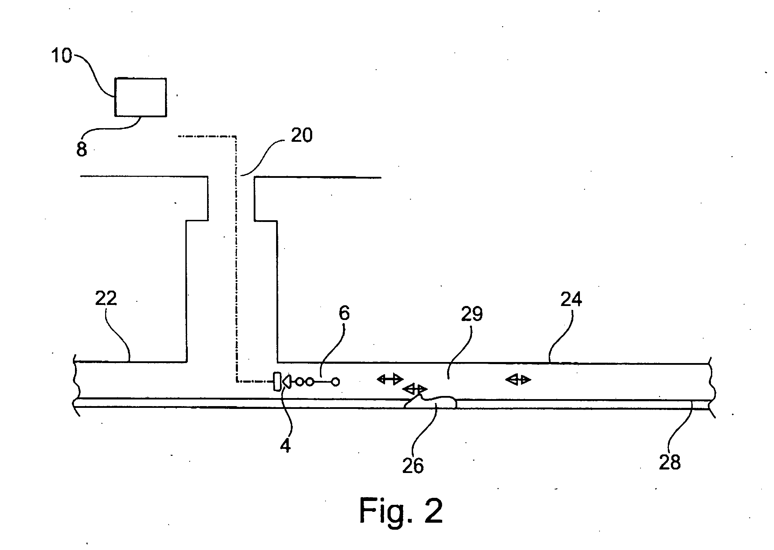

Referring to Figures 1 and 2 of the accompanying drawings, there is shown an apparatus 2 for the airborne acoustic inspection of pipes and in particular sewer pipes. The apparatus 2 comprises a loudspeaker 4 configured to emit an acoustic signal, a detector array 6 configured to detect acoustic signals and a signal processor unit 8 configured to determine an acoustic intensity from the detected acoustic signals. The signal processor unit 8 may be a mobile personal computer (e.g. a laptop) 10 in data communication with the detector array 6. The data communication may be via a physical cable, short range wireless communication (e.g. Bluetooth (trade mark)), etc. The acoustic intensity can be analysed and/or represented graphically to identify blockages and intrusions in the pipes.

The apparatus 2 is mounted on a pole 11 (only part shown) whereby the apparatus 2 can be lowered down a man-hole by a user at surface level. The apparatus 2 uses the acoustic intensity of the signal detected by the detector array to make an improved inspection possible. The detector array 6 comprises a horizontal array of two or more, in this case four, MicroElectro-Mechanical System ("MEMS") microphones 12 arranged on a slim Printed Circuit Board ("PCB") 14 covered by a protective but acoustically transparent screen 15. The microphones 12 are spaced at distances which are much less than $\lambda/5$, where $\lambda$ is the acoustic wavelength at the maximum frequency in the acoustic spectrum of interest. Each microphone 12 has an associated microphone channel to output its received signal to the signal processor 8. The detector array 6 is installed and mounted in front of the loudspeaker 4 at a distance of less than 0.5m from the loudspeaker diaphragm.

With reference to Figure 2 of the accompanying drawings, there is shown the apparatus 2 at the bottom of a manhole 20 in a sewer pipe 22 in which there are perforations and cracks at 24 and a blockage at 26. The water level in the sewer pipe 22 is indicated at 28 and air, through which the acoustic signals are propagated, is above the water and indicated generally by numeral 29. A typical sewer runs about 20% full of water.

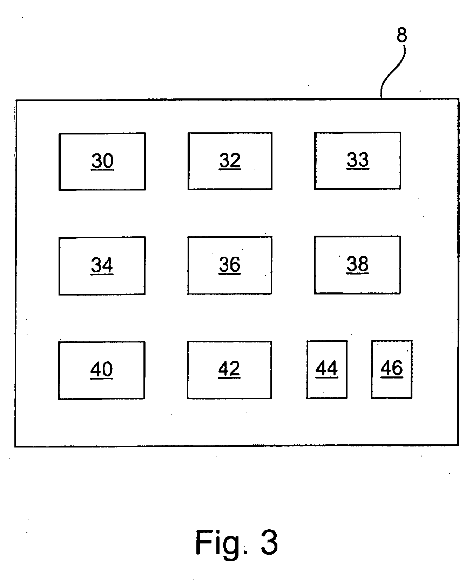

Elements of the signal processor 8 are shown in more detail in Figure 3 of the accompanying drawings and comprise a deconvolving unit 30, a time dependent acoustic intensity determining unit 32, a filter unit 33, a normalising unit 34, a time-shift compensation unit 36 and a combining unit 38. The PC includes a screen 40 for displaying the results and a memory 42 for storing the results. There is further provided a database 44 containing temporal signatures of reflections which previously have been recorded, stored and associated with those known types of pipe defects and a correlation analysis unit 46. The operation of the elements of the signal processor are described below as part of the following description of use of the apparatus 2.

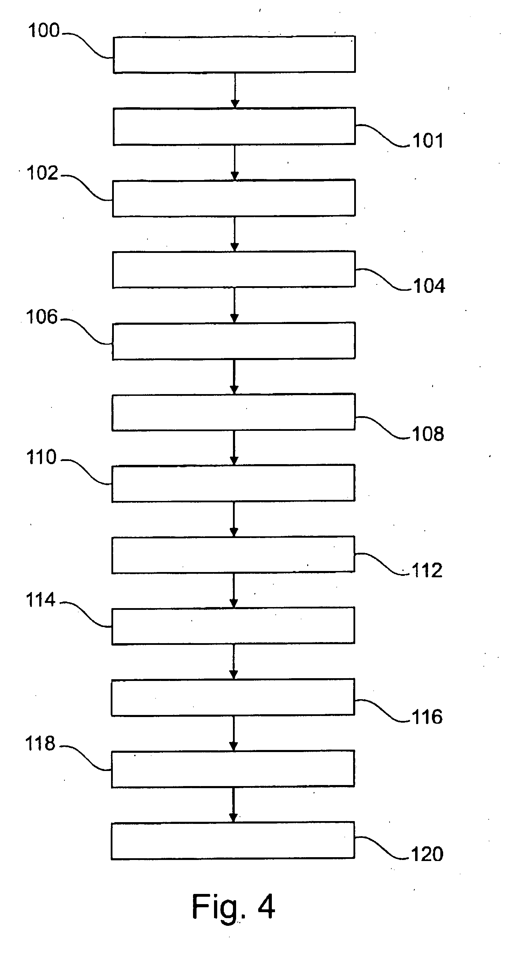

With reference to Figure 4 of the accompanying drawings, a method of use of the apparatus 2 is described. The apparatus 2 is inserted (step 100) in a sewer pipe via the manhole 20 permanently or temporarily (see Figure 2). The apparatus 2 is introduced in the pipe 22 and held near its soffit at a fixed distance (less than 1.0m) from the pipe end as shown in Fig. 2. The detector array 6 is directed into the pipe 22 and its orientation is maintained approximately in line with the direction of the pipe. The apparatus 2 can be used in the presence of but must be positioned above the water level to avoid flooding of the microphones 12.

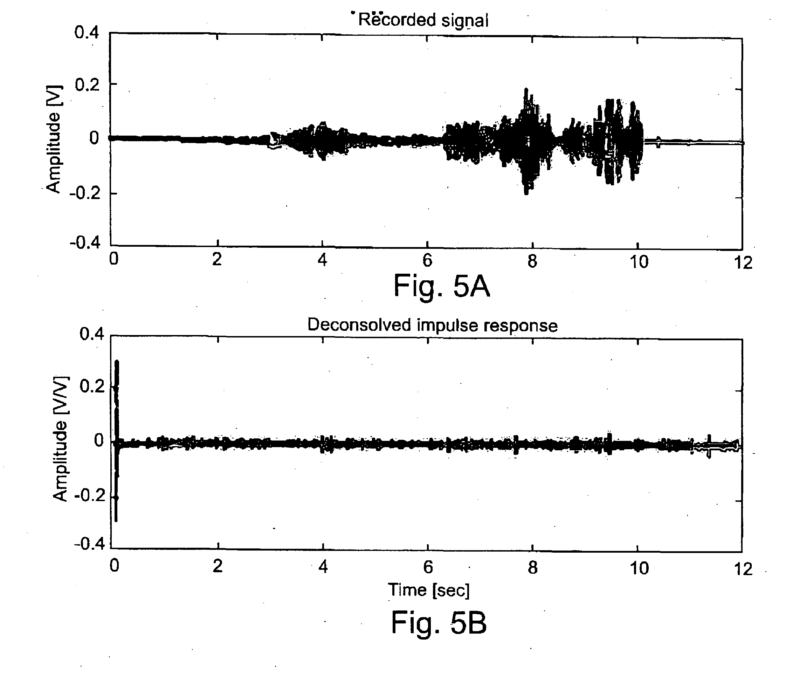

A long broadband acoustic signal $s(t)$ (e.g. a maximum length sequence, pseudo-random noise or sinusoidal sweep) is broadcast (step 101) via the speaker for up to 60 sec period. The frequency spectrum of the broadband acoustic signal should be smooth and continuous from 10 Hz up to the Nyquist frequency to allow the application of the Fourier deconvolution theorem. The acoustic pressure response of the pipe to this signal, $p_n(t)$, is recorded synchronously through all the channels of the detector array 6 (step 102). The length of the acoustic signal and its frequency composition control the signal-to-noise ratio which should be sufficiently high to be able to calculate accurately the impulse response of the sewer in the audible frequency range. The impulse response of the pipe $h_n(t)$ is then deconvolved (step 104) using deconvolving unit 30 for each of the microphone channels from the relation $p_n(t) = \int_{-\infty}^{+\infty} s(\tau) h_n(t - \tau) d\tau$ using the Fourier theorem or another suitable deconvolution method. Here $\tau$ is the time delay. Examples of the recorded sinusoidal sweep signal and its deconvolution for a live 225mm clay sewer are shown in Fig. 5. Figure 5A shows the recorded signal and Figure 5B shows the deconvolved impulse response for an example using a 150mm clay pipe with a blockage at 7m from the inspection position.

Microphone pairs are then selected (step 106) and the signals from the microphones are filtered (step 108) in narrow frequency bands below the 1st cut-on frequency of the sewer pipe 22 by filter unit 32. In the case of a cylindrical sewer, the 1st cut-on frequency is $f_{max} \cong \dfrac{0.5857 c_0}{2a}$, where a is the sewer radius and $c_0$ is the sound speed in air

The acoustic spectrum of interest can be determined as set out in Technical Review: Sound Intensity (Theory), No. 3, Bruel and Kjaer, 1982, the content of which is incorporated herein by reference. Pairs of the filtered microphone signals are combined (step 110) non-linearly by time dependent acoustic intensity determining unit 33 to obtain the time-dependent acoustic intensity (step 112) according to: $I_{mn}(t) = \dfrac{1}{2\Delta_{mn}\rho_0}\big(p_m(t) + p_n(t)\big)\int\big(p_m(t) - p_n(t)\big)dt$,

where $\Delta_{mn}$ is the distance between microphone $m$ and $n$, $\rho_0$ is the air density. Generally, the acoustic intensity is a vector defined as the multiplication of the mean sound pressure between the microphones m and n, $p_{mn}(t) \cong (p_m(t) + p_n(t)) / 2$, by the particle velocity $u_{mn}(t) = \dfrac{1}{\Delta_{mn}\rho_0}\int\big(p_m(t) - p_n(t)\big)dt$ measured approximately using the pressure difference between these two microphones.

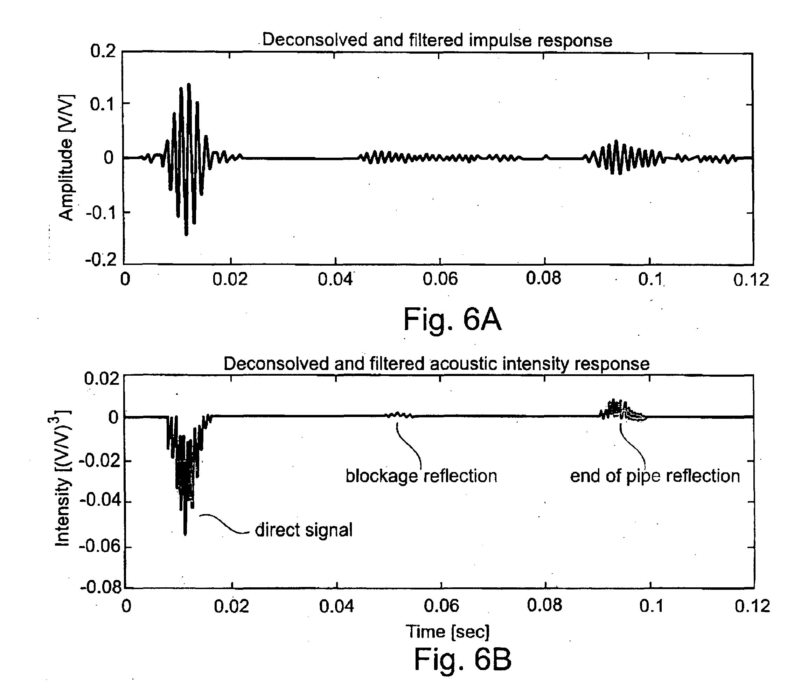

A typical example of this procedure applied to microphone signals filtered in the 600- 800 Hz band is presented in Fig. 6A. Figure 6B shows the deconvolved and filtered acoustic intensity response. This figure illustrates the improvement in the resolution which can be achieved by application of the non-linear acoustic intensity processor. The results obtained in the preceding step are normalised (step 114) by normalisation unit 34 against the norm taken as

$$\|I_{mn}\| = \left|\max_{t \leq T_0}\big[-I_{mn}(t)\big]\right|,$$ $T_0$ being some time limit before the first strong reflection, to ensure that the maximum intensity of the incident sound wave is set to -1.

The normalised intensity response, $I_{mn}(t)/\|I_{mn}\|$ for individual microphone pairs, m and n, are compensated (step 116) for the time shift, $\tau_{mn}$, which is present in the intensity response because of the variable distance from the speaker diaphragm to the centre of the microphone pair. Therefore, the normalised and time-shift compensated intensity response is $e_{mn}(t) = I_{mn}(t + \tau_{mn}) / \|I_{mn}\|$. This operation is achieved with compensation unit 36. For this purpose the temperature measurements are taken by the thermocouple connected to unit 36 and used to determine the sound speed in air.

The normalised and time-shift compensated intensity responses for several microphone pairs are combined coherently (step 118) by combining unit 38 to obtain the mean intensity response function, $(t) = \dfrac{1}{N}\sum_{m,n} e_{mn}(t)$, where

$N$ is the number of microphone pairs. In this way the effect of sound reflection from the pipe termination near the acoustic instrument is reduced. Only the positive (reflected) part of the mean intensity response function is used (step 120) for the sewer condition classification in the forward direction, i.e. $e^+(t) = (e(t) + |e(t)|)/2$.

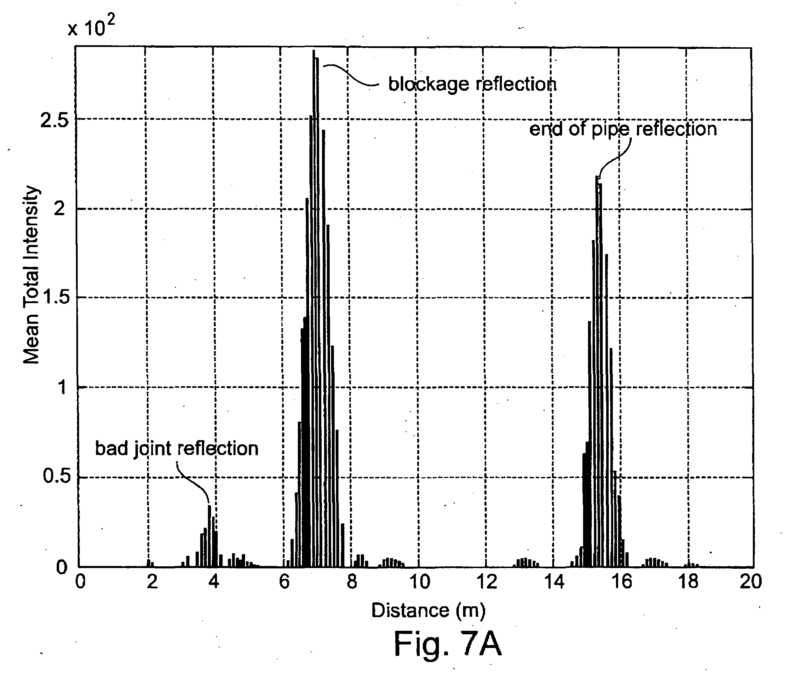

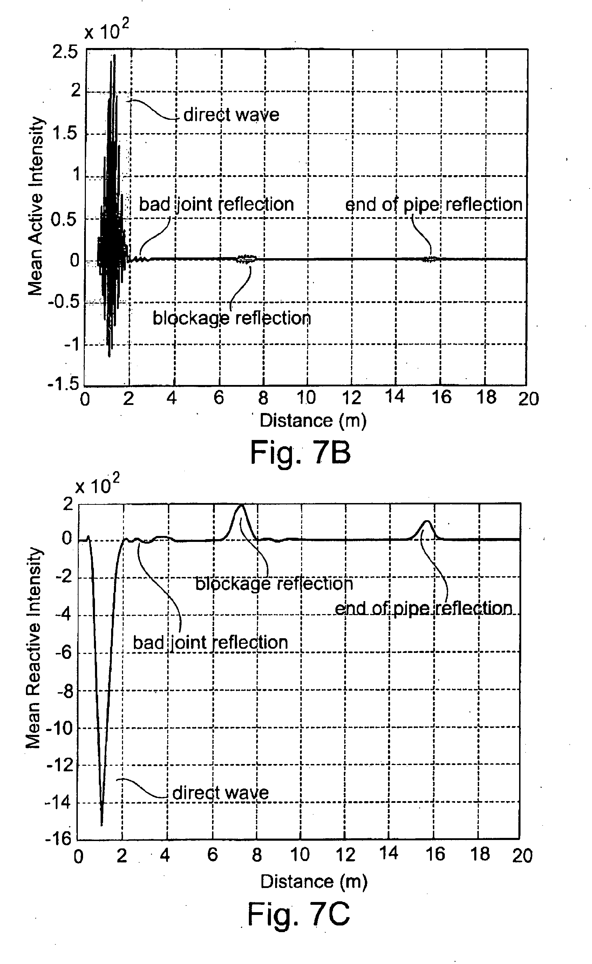

The positive part of the mean intensity response function is recorded (step 122) in several frequency bands, stored and figured as an acoustic signature of the sewer. This signature is affected by blockages, lateral connections, cracks and pipe ends. The strength of reflections is analysed in each of the selected frequency bands to allow the identification of blockages, cracks, lateral connections and their combinations. The identification is carried out using a correlation analysis by correlation analysis unit 46 performed against the database 44 of temporal signatures of reflections which previously have been recorded, stored and associated with those known types of pipe defects. Figure 7 is a graph illustrating the positive (reflected) part of the acoustic intensity response function for a test pipe that might be contained in such a database 44. A visual indication of the characterisation of the sewer is then displayed on the screen 40.

The strength of reflections is related to the hydraulic roughness of the sewer. For this purpose the time-dependent acoustic intensity for each microphone pair is decomposed into its active and reactive parts (Heyser, R.C. (1986), Instantaneous Intensity, Proc. 81st AES Convention, paper 2399, Los Angeles, 12-16 November), i.e.

$$I_{mn}(t) = I_{mn}^{(a)}(t) + iI_{mn}^{(r)}(t) ,$$ , where the active and reactive parts are given by

$$I_{mn}^{(a)}(t) = [\, p_{mn}(t)u_{mn}(t) + \hat{p}_{mn}(t)\hat{u}_{mn}(t)]\big/2$$

and

$$I_{mn}^{(r)}(t) = [\, \hat{p}_{mn}(t)u_{mn}(t) - p_{mn}(t)\hat{u}_{mn}(t)]\big/2 ,$$

respectively (step 124). In the above expressions $\hat{f}$ denotes a Hilbert transform, i.e. $\hat{f}(t) = \dfrac{1}{\pi}\mathrm{Pr}\displaystyle\int_{-\infty}^{+\infty}\dfrac{f(\tau)}{t-\tau}dt$, where

Pr stands for the principle value of integral.

The intensity data taken from the any of the available microphone pairs are normalized so that the intensity minimum corresponding to the incident sound wave was set to min$\{I_{mn}(t)\}$ = -1 and min $\min\{I_{mn}^{(r)}(t)\}=-1$ for all measured data (step 126). The normalised instantaneous intensity is calculated in narrow bands as suggested above. The total and reactive reflected acoustical energies are determined from the following expressions

$$E_t(t) = \frac{1}{2}\int_{t_1}^{t_2}\{|I_{mn}(t)| + I_{mn}(t)\}dt \ \text{ and } \ E_r(t) = \frac{1}{2}\int_{t_1}^{t_2}\{|I_{mn}^{(r)}(t)| + I_{mn}^{(r)}(t)\}dt ,$$

respectively (step 128). Here $t_1$ and $t_2$ are the integration limits which define the time interval between the end of the incident sound wave and the sound wave reflected from the end of the pipe as illustrated in Figure 6B. Effectively, the above integrals include only the reflections which occur due to the discontinuities present in the pipe and, in general, ignore the manhole effects which were relatively strong. The values of $E_t$ and $E_r$ can be linked directly to the hydraulic energy losses caused by the presence of wall roughness, pipe wall defects and cross-sectional area change. It can be claimed that a typical relation between the reflected energy and the hydraulic roughness is $k_s = b \log(a[E - E_0])$ or similar relation, where $k_s$ is the Nikuradze roughness (Chadwick, A., Morfett, J., Borthwick, M. (2004) Hydraulics in civil and environmental engineering. 4th edn., London: Spon Press) coefficient (step 130) and $a$, $b$ and $E_0$ some empirical coefficients which minimise the error between the prediction by the above expression and measured data.

Once the instantaneous intensity is determined as detailed above, the hydraulic roughness can be determined.

Although a pole is a preferred mounting arrangement, another option is for the apparatus 2 to be mounted on a boom fixed to a carriage whereby the carriage can be lowered into the pipe and the boom adjusted by remote control.

It will be appreciated that although preferred pre- and post-processing of the signal used to derive the acoustic intensity is described herein, other processing options are available based on using the acoustic intensity derived from the received acoustic signal.

## Claims

1. An apparatus (2) for the airborne acoustic inspection of pipes, the apparatus comprising:

   a loudspeaker (4) configured to emit acoustic signals;
   a detector array (6) configured to detect acoustic signals; and
   a signal processor (8) configured to determine an acoustic intensity from the detected acoustic signals;
   **characterised in that**:

the apparatus (2) comprises a time-shift compensation unit (36) configured to compensate the acoustic intensity for time differences between receipt of a given signal at spaced microphone pairs of the detector array (6).

2. An apparatus (2) according to claim 1, in which the apparatus (2) is configured such that the emitted acoustic signals are configured to be one of maximum length sequences, sinusoidal sweep or broadband pseudo-random noise.

3. An apparatus (2) according to claim 1 or claim 2, in which the apparatus (2) is configured such that the acoustic intensity in the pipe is determined for each microphone (12) pair is decomposed into its active and reactive parts according to:

$$I_{mn}(t) = I_{mn}^{(a)}(t) + iI_{mn}^{(r)}(t) \, ,$$

where the active and reactive parts are given by:

$$I_{mn}^{(a)}(t) = \left[ p_{mn}(t)u_{mn}(t) + \hat{p}_{mn}(t)\hat{u}_{mn}(t) \right]/2$$

and

$$I_{mn}^{(r)}(t) = \left[ \hat{p}_{mn}(t)u_{mn}(t) - p_{mn}(t)\hat{u}_{mn}(t) \right]/2 \, ,$$

respectively
where p is the acoustic pressure response of the pipe to a signal for microphones $m$ and $n$ and $t$ is time.

4. An apparatus (2) according to any preceding claim, in which the apparatus (2) is configured for the remote inspection of sewer pipes.

5. An apparatus (2) according to any preceding claim, in which the detector array (6) comprises a plurality of microphones (12).

6. An apparatus (2) according to claim 5, in which each microphone (12) is spaced less than $\lambda/5$ from a neighbouring microphone, where A is the acoustic wavelength at the maximum frequency in the predetermined acoustic spectrum of interest.

7. An apparatus (2) according to claim 5 or claim 6, in which there is a first microphone (12), a second microphone, (12) and a third microphone (12) and the spacing between the first microphone and the second microphone is different from the spacing between the pairs of the following microphone

8. An apparatus (2) according to any preceding claim, in which the apparatus (2) comprises a normalising unit (34) configured to normalise the acoustic intensity.

9. An apparatus (2) according to any preceding claim, in which the apparatus (2) comprises a combining unit (38) configured to combine the intensity response from a plurality of microphone pairs.

10. An apparatus (2) according to any preceding claim, in which the apparatus (2) further comprises a display unit (10) for displaying graphically the determined acoustic intensity.

11. An apparatus (2) according to any preceding claim, in which the apparatus (2) comprises an elongate probe on which is mounted a the detector array (6).

12. A method for the airborne acoustic inspection of pipes, the method comprising deploying an apparatus (2) according to any preceding claim in a sewer, emitting acoustic signals from the loudspeaker (4), detecting acoustic signals using the detector array (6) and determining an acoustic intensity from the detected acoustic signals.

**Patentansprüche**

1. Eine Vorrichtung (2) zur akustischen Untersuchung von Rohren in der Luft, wobei die Vorrichtung Folgendes beinhaltet:

  einen Lautsprecher (4), der dazu dient, akustische Signale auszusenden;
  eine Detektoranordnung (6), die dazu dient, akustische Signale zu erkennen;
  einen Signalprozessor (8), der dazu dient, eine Schallstärke aus den erkannten akustischen Signalen zu ermitteln;
  **dadurch gekennzeichnet, dass**
  die Vorrichtung (2) eine Zeitverschiebungs-Ausgleicheinheit (36) umfasst, die dazu dient, die Schallstärke für Zeitunterschiede zwischen dem Empfang eines bestimmten Signals in beabstandeten Lautsprecherpaaren der Detektoranordnung (6) auszugleichen.

2. Eine Vorrichtung (2) gemäß Anspruch 1, wobei die Vorrichtung (2) so beschaffen ist, dass das ausgesendete akustische Signal eines aus der Gruppe bestehend aus Maximalfolgen, sinusförmigem Frequenzdurchlauf oder pseudozufälligem Breitbandsignal ist.

3. Eine Vorrichtung (2) gemäß Anspruch 1 oder Anspruch 2, wobei die Vorrichtung (2) so beschaffen ist, dass die Schallstärke in der Röhre für jedes Mikrofonpaar (12) festgelegt ist und nach den folgenden Formeln in seine aktiven und reaktiven Abschnitte zerlegt wird:

$$I_{mn}(t) = I_{mn}^{(a)}(t) + iI_{mn}^{(r)}(t) \ ,$$

wo die aktiven und reaktiven Abschnitte sich aus Folgendem ergeben:

$$I_{mn}^{(a)}(t) = [\, p_{mn}(t)u_{mn}(t) + \hat{p}_{mn}(t)\hat{u}_{mn}(t)]/2$$

bzw.

$$I_{mn}^{(r)}(t) = [\, \hat{p}_{mn}(t)u_{mn}(t) - p_{mn}(t)\hat{u}_{mn}(t)]/2 \, ,$$

worin p die Schalldruckreaktion der Röhre auf ein Signal für die Mikrofone *m* und *n ist* und *t* die Zeit ist.

4. Eine Vorrichtung (2) gemäß einem vorhergehenden Anspruch, wobei die Vorrichtung (2) zur Fernuntersuchung von Kanalrohren dient.

5. Eine Vorrichtung (2) gemäß einem vorhergehenden Anspruch, wobei die Detektoranordnung (6) eine Vielzahl von Mikrofonen (12) umfasst.

6. Eine Vorrichtung (2) gemäß Anspruch 5, worin jedes Mikrofon (12) weniger als λ/5 von einem benachbarten Mikrofon beabstandet ist, wobei λ die Schallwellenlänge bei der Höchstfrequenz im betreffenden, vorher festgelegten akustischen Spektrum ist.

7. Eine Vorrichtung (2) gemäß Anspruch 5 oder Anspruch 6, worin es ein erstes Mikrofon (12), ein zweites Mikrofon (12) und ein drittes Mikrofon (12) gibt, und worin der Abstand zwischen dem ersten Mikrofon und dem zweiten Mikrofon sich vom Abstand zwischen den darauffolgenden Mikrofonpaaren unterscheidet.

**8.** Eine Vorrichtung (2) gemäß einem vorhergehenden Anspruch, worin die Vorrichtung (2) eine Normalisierungseinheit (34) umfasst, die dazu dient, die Schallstärke zu normalisieren.

**9.** Eine Vorrichtung (2) gemäß einem vorhergehenden Anspruch, worin die Vorrichtung (2) eine Kombinationseinheit (38) umfasst, die dazu dient, die Reaktionsstärke von einer Vielzahl von Mikrofonpaaren zu kombinieren.

**10.** Eine Vorrichtung (2) gemäß einem vorhergehenden Anspruch, worin die Vorrichtung (2) überdies einen Bildschirm (10) umfasst, um die ermittelte Schallstärke grafisch anzuzeigen.

**11.** Eine Vorrichtung (2) gemäß einem vorhergehenden Anspruch, in der die Vorrichtung (2) eine längliche Messsonde umfasst, auf der die Detektoranordnung (6) befestigt ist.

**12.** Ein Verfahren zur akustischen Untersuchung von Rohren in der Luft, worin das Verfahren den Einsatz einer Vorrichtung (2) gemäß einem vorhergehenden Anspruch in einem Kanalisationsrohr beinhaltet, wobei akustische Signale vom Lautsprecher (4) ausgesendet werden, akustische Signale unter Verwendung der Detektoranordnung (6) entdeckt werden und eine Schallstärke aus den entdeckten akustischen Signalen bestimmt wird.

**Revendications**

**1.** Un appareil (2) destiné à l'inspection acoustique aéroportée de tuyaux, l'appareil comprenant :

un haut-parleur (4) configuré de façon à émettre des signaux acoustiques,
un réseau de détecteurs (6) configuré de façon à détecter des signaux acoustiques, et
un processeur de signaux (8) configuré de façon à déterminer une intensité acoustique à partir des signaux acoustiques détectés,
**caractérisé en ce que** :

l'appareil (2) comprend une unité de compensation de décalage temporel (36) configurée de façon à compenser l'intensité acoustique pour des différences temporelles entre la réception d'un signal donné au niveau de paires de microphones espacés du réseau de détecteurs (6).

**2.** Un appareil (2) selon la Revendication 1, dans lequel l'appareil (2) est configuré de sorte que les signaux acoustiques émis soient configurés de façon à être d'un type parmi des séquences de longueur maximale, un balayage sinusoïdal ou un bruit pseudo-aléatoire à large bande.

**3.** Un appareil (2) selon la Revendication 1 ou 2, dans lequel l'appareil (2) est configuré de sorte que l'intensité acoustique dans le tuyau soit déterminée pour chaque paire de microphones (12) et décomposée en ses parties active et réactive selon :

$$I_{mn}(t) = I_{mn}^{(a)}(t) + i I_{mn}^{(r)}(t),$$

où les parties active et réactive sont données par :

$$I_{mn}^{(a)}(t) = [\, p_{mn}(t) u_{mn}(t) + \hat{p}_{mn}(t) \hat{u}_{mn}(t) ]/2$$

et

$$I_{mn}^{(r)}(t) = [\, \hat{p}_{mn}(t) u_{mn}(t) - p_{mn}(t) \hat{u}_{mn}(t) ]/2,$$

respectivement où p est la réponse de pression acoustique du tuyau à un signal pour les microphones *m* et *n* et *t* est le temps.

4. Un appareil (2) selon l'une quelconque des Revendications précédentes, dans lequel l'appareil (2) est configuré pour l'inspection à distance de tuyaux d'égout.

5. Un appareil (2) selon l'une quelconque des Revendications précédentes, dans lequel le réseau de détecteurs (6) comprend une pluralité de microphones (12).

6. Un appareil (2) selon la Revendication 5, dans lequel chaque microphone (12) est espacé de moins de λ/5 d'un microphone voisin où λ est la longueur d'onde acoustique à la fréquence maximale dans le spectre acoustique prédéterminé d'intérêt.

7. Un appareil (2) selon la Revendication 5 ou 6, dans lequel on trouve un premier microphone (12), un deuxième microphone (12) et un troisième microphone (12) et l'espacement entre le premier microphone et le deuxième microphone est différent de l'espacement entre les paires des microphones suivants.

8. Un appareil (2) selon l'une quelconque des Revendications précédentes, dans lequel l'appareil (2) comprend une unité de normalisation (34) configurée de façon à normaliser l'intensité acoustique.

9. Un appareil (2) selon l'une quelconque des Revendications précédentes, dans lequel l'appareil (2) comprend une unité de combinaison (38) configurée de façon à combiner la réponse d'intensité provenant d'une pluralité de paires de microphones.

10. Un appareil (2) selon l'une quelconque des Revendications précédentes, dans lequel l'appareil (2) comprend en outre une unité d'affichage (10) destinée à afficher graphiquement l'intensité acoustique déterminée.

11. Un appareil (2) selon l'une quelconque des Revendications précédentes, dans lequel l'appareil (2) comprend une sonde allongée sur laquelle est monté le réseau de détecteurs (6).

12. Un procédé destiné à l'inspection acoustique aéroportée de tuyaux, le procédé comprenant le déploiement d'un appareil (2) selon l'une quelconque des Revendications précédentes dans un égout, l'émission de signaux acoustiques à partir du haut-parleur (4), la détection de signaux acoustiques au moyen du réseau de détecteurs (6) et la détermination d'une intensité acoustique à partir des signaux acoustiques détectés.

Fig. 1

EP 2 326 933 B1

Fig. 2

8

| | | |
|---|---|---|
| 30 | 32 | 33 |
| 34 | 36 | 38 |
| 40 | 42 | 44 46 |

Fig. 3

100 — ▭

101

102 — ▭

104

106 — ▭

108

110 — ▭

112

114 — ▭

116

118 — ▭

120

Fig. 4

## Recorded signal

## Fig. 5A

## Deconsolved impulse response

Time [sec]

## Fig. 5B

Deconsolved and filtered impulse response

Fig. 6A

Deconsolved and filtered acoustic intensity response

blockage reflection

end of pipe reflection

direct signal

Time [sec]

Fig. 6B

EP 2 326 933 B1

Fig. 7A

Fig. 7B

Fig. 7C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03048713 A

**Non-patent literature cited in the description**

- **PODD et al.** Rapid Sonic Characterisation of Sewer Change and Obstructions. *Water Science and Technology,* 2007, vol. 56 (11), 131-139
- **BRUEL ; KJAER.** *Technical Review: Sound Intensity (Theory), No. 3,* 1982
- **HEYSER, R.C.** Instantaneous Intensity. *Proc. 81st AES Convention, paper 2399, Los Angeles,* 12 November 1986
- **CHADWICK, A. ; MORFETT, J. ; BORTHWICK, M.** Hydraulics in civil and environmental engineering. Spon Press, 2004